# EUROPÄISCHE PATENTSCHRIFT

(11) **EP 2 867 037 B1**
(45) Veröffentlichungstag und Bekanntmachung des Hinweises auf die Patenterteilung: **22.05.2019**
(21) Anmeldenummer: 13727159.9
(22) Anmeldetag: 06.06.2013
(51) Int. Cl.: B60C 13/00, B60C 13/02

(54) **FAHRZEUGLUFTREIFEN**
PNEUMATIC VEHICLE TIRE
PNEU DE VEHICULE

(30) Priorität: 02.07.2012 DE 102012105864
(43) Veröffentlichungstag der Anmeldung: 06.05.2015
(73) Patentinhaber: Continental Reifen Deutschland GmbH, 30165 Hannover (DE)
(72) Erfinder: BEHR, Ulrich, 30169 Hannover (DE); RITTWEGER, Stefan, 30163 Hannover (DE)
(74) Vertreter: Finger, Karsten
(86) Internationale Anmeldenummer: PCT/EP2013/061630
(87) Internationale Veröffentlichungsnummer: WO 2014/005784

(56) Entgegenhaltungen:
- EP-A1- 2 647 510
- EP-A2- 1 063 071
- GB-A- 2 010 755
- JP-A- H1 076 815
- US-A- 2 146 942

## Beschreibung

Die Erfindung betrifft einen Fahrzeugreifen - insbesondere einen Fahrzeugluftreifen - mit profiliertem Laufstreifen und zwei Seitenwänden, wobei auf wenigstens einer Seitenwand ein schraffurartiges Muster aus einer Vielzahl von linienförmigen Erhebungen ausgebildet ist, die einer Kurvenschar zuzuordnen sind und die sich innerhalb des mit dem schraffurartigen Muster ausgebildeten Oberflächenbereichs der Seitenwand nicht schneiden, wobei die linienförmigen Erhebungen jeweils längs ihrer Erstreckung mit einer senkrecht zur Mantelkontur der Seitenwand gemessenen Erstreckungshöhe h≥0,8mm ausgebildet sind.

Derartige Fahrzeugluftreifen sind bekannt. Die Ausbildungen mit derartigen schraffurartigen, linienförmigen Erhebungen werden in dem um auf der Reifenseitenwand dargestellte Buchstaben herum ausgebildeten Oberflächenbereich der Seitenwand eingesetzt. Derartige schraffurartige Ausbildungen werden auch eingesetzt bei Reifenausbildungen, in denen in der im Wesentlichen glatten Oberfläche der Seitenwand groß dargestellte Buchstaben ausgebildet sind, wobei die Linien der Buchstaben zu ihrer Gestaltung in der Oberfläche als gegenüber der umgebenden Oberfläche der Seitenwand vertiefte Flächen ausgebildet sind und wobei diese vertieften Flächen in ihrem Vertiefungsgrund mit derartigen Schraffuren versehen sind. Die schraffurartigen, linienförmigen Erhebungen sowohl auf den von Buchstabengestaltung freien Oberflächen als auch im Bereich der Buchstabengestaltung ermöglichen dabei durch die Reflektion des Lichtes an den Flanken der linienförmigen Erhebungen die Erzeugung einer besonderen Relieftiefen- bzw. räumlichen Tiefenwirkung. Die Kombination von Oberflächenbereichen mit schraffurartigen, linienförmigen Erhebungen mit im Wesentlichen glatten von derartigen schraffurartigen Erhebungen freien Oberflächen ermöglicht somit eine besonders kontrastreiche Oberflächengestaltung und im Zusammenhang mit der Verwendung von Buchstaben oder anderen Symbolen auch eine besonders kontrastreiche Hervorhebung der zu vermittelnden Information.

Üblicherweise werden die linienförmigen Erhebungen derartiger schraffurartiger Oberflächengestaltungen in ihren senkrecht zur Erstreckungsrichtung der linienförmigen Erhebung gebildeten Querschnitten aus zwei sich über die gesamte zur Mantelfläche der Seitenwand senkrecht gemessene Erstreckungshöhe der linienförmigen Erhebung geradlinig erstreckten Flanken ausgebildet, die sich in einem Scheitelpunkt unter Einschluss eines spitzen Winkels schneiden und somit eine Art V-förmige Oberflächenkontur bilden. Darüber hinaus sind derartige schraffurartige, linienförmige Erhebungen bekannt, bei denen diese geradlinigen Flanken in der Position der maximalen Erstreckungshöhe der linienförmigen Erhebung jeweils eine geradlinige Schnittkonturlinie schneiden, welche in der maximalen Erstreckungshöhe die beiden Flanken miteinander verbindet. In beiden Fällen sind die Flanken über ihre gesamte Erstreckung geradlinig ausgebildet, und die Schnittkontur ist mit in der Position der maximalen Erstreckungshöhe ausgebildeten spitzen Schnittwinkeln von geradlinigen Schnittkonturlinien versehen. Hierdurch sind die linienförmigen Erhebungen und somit die schraffurartigen Muster jedoch besonders empfindlich gegen Abrieb bei Kontakt der Reifenseitenwand mit Bordsteinen oder auch beim Transport von Reifen, wodurch die erzeugte Relieftiefe und die Lebensdauer der schraffurartigen Muster reduziert wird. Darüber hinaus bilden die vollständig geraden, sich unter spitzen Winkeln schneidenden Oberflächenkonturabschnitte der linienförmigen Erhebungen Verschmutzungsprobleme in der zur Ausformung der Seitenwand in der Reifenvulkanisationsform ausgebildeten Seitenschale, was zusätzliche Entlüftungsprobleme bei der Ausformung ermöglichen kann.

Aus der GB 2010 755 A ist ein Fahrzeugluftreifen gemäß den Merkmalen des Oberbegriffs von Anspruch 1 bekannt.

Der Erfindung liegt die Aufgabe zugrunde, mit einfachen Mitteln Fahrzeugreifen mit schraffurartigen Mustern aus einer Vielzahl von linienförmigen Erhebungen mit einer verbesserten Haltbarkeit und Entformbarkeit der schraffurartigen Muster zu ermöglichen.

Die Aufgabe wird erfindungsgemäß durch die Ausbildung eines Fahrzeugreifens - insbesondere eines Fahrzeugluftreifens - mit profiliertem Laufstreifen und mit zwei Seitenwänden, wobei auf wenigstens einer Seitenwand ein schraffurartiges Muster aus einer Vielzahl von linienförmigen Erhebungen ausgebildet ist, die einer Kurvenschar zuzuordnen sind und die sich innerhalb des mit dem schraffurartigen Muster ausgebildeten Oberflächenbereichs der Seitenwand nicht schneiden, wobei die linienförmigen Erhebungen jeweils längs ihrer Erstreckung mit einer senkrecht zur Mantelkontur der Seitenwand gemessenen Erstreckungshöhe h≤0,8mm ausgebildet sind, gemäß den Merkmalen von Anspruch 1 gelöst, bei dem die linienförmigen Erhebungen in den Querschnittsebenen senkrecht zur Haupterstreckungsrichtung der linienförmigen Erhebung jeweils mit einer Schnittkontur ausgebildet sind, welche wenigstens in dem zwischen der Erstreckungshöhe (h/2) und der Erstreckunghöhe h der linienförmigen Erhebung ausgebildeten äußeren, vom Reifen wegweisend ausgebildeten Erstreckungsbereich mit einem zum Reifeninnern hin gekrümmten Konturverlauf und mit einem in der Erstreckungshöhe h ausgebildeten Scheitelpunkt der Erhebung ausgebildet ist und bei dem die linienförmigen Erhebungen in den Querschnittsebenen senkrecht zur Haupterstreckungsrichtung der linienförmigen Erhebung jeweils mit einer Schnittkontur ausgebildet sind, die in ihrem inneren zum Reifen hingerichteten Erstreckungsabschnitt geradlinig ausgebildet sind.

Durch diese Ausbildung wird ein verbessertes Reflektionsverhalten der linienförmigen Erhebungen ermöglicht, wodurch ein für den Betrachter intensiverer Relieftiefeneindruck erzeugt werden kann. Hierdurch kann eine noch verbesserte Kontrastdarstellung im Bereich der Reifenoberfläche sowohl bei Nutzung auf freien Oberflächenelementen als auch im Zusammenhang mit der kontrastreichen Darstellung von Buchstaben oder anderen Symbolen bei einfacher Produzierbarkeit der erforderlichen Reifenform zur Ausformung der mit schraffurartigem Muster ausgebildeten Oberfläche erzeugt werden. Darüber hinaus bewirkt die abgerundete Oberfläche einen erhöhten Abriebschutz der linienförmigen Erhebungen und somit der schraffurartigen Oberflächengestaltung, wodurch die Lebensdauer der schraffurartigen Oberfläche an sich sowie deren Relieftiefenwirkung durch die linienförmigen Erhebungen erhöht werden kann. Darüber hinaus ermöglicht diese Ausbildung eine Reduktion der Verschmutzungsgefahr der Seitenschalen zur Ausformung der Oberfläche in der Reifenform und somit eine Reduktion der Gefahr von Entlüftungsproblemen.

Besonders vorteilhaft ist die Ausbildung eines Fahrzeugreifens gemäß den Merkmalen von Anspruch 2, bei dem die Kurvenschar aus jeweils parallel zueinander ausgebildeten Kurven ausgebildet ist. Dies ermöglicht eine sehr homogen wirkende Ausbildung des mit dem schraffurartigen Muster ausgebildeten Oberflächenbereichs.

Besonders vorteilhaft ist die Ausbildung eines Fahrzeugreifens gemäß den Merkmalen von Anspruch 3, die Kurvenschar aus punktsymmetrischen Kurven ausgebildet ist.

Besonders vorteilhaft ist die Ausbildung eines Fahrzeugreifens gemäß den Merkmalen von Anspruch 4, bei dem die Kurven der Kurvenschar in einer Position außerhalb des mit dem schraffurartigen Muster ausgebildeten Oberflächenbereichs der Seitenwand mit einem - insbesondere auf der Reifenachse angeordneten - gemeinsamen Schnittpunkt ausgebildet sind. Hierdurch können erkennbare Vorteile bei Anscheuerung erzielt werden. Versuche haben gezeigt, dass die Abriebresistenz gerade durch diese Ausführung zusätzlich erkennbar verbessert werden kann.

Besonders vorteilhaft ist die Ausbildung eines Fahrzeugreifens gemäß den Merkmalen von Anspruch 5, wobei die Kurvenschar als Strahlenschar durch den Symmetriepunkt mit gleichen zwischen benachbarten Strahlen eingeschlossenen Winkeln α - insbesondere mit 0°≤ α ≤1° - ausgebildet ist. Dies ermöglicht eine sehr homogen wirkende Ausbildung des mit dem schraffurartigen Muster ausgebildeten Oberflächenbereichs.

Besonders vorteilhaft ist die Ausbildung eines Fahrzeugreifens gemäß den Merkmalen von Anspruch 6, wobei die Kurven der Kurvenschar mit einem längs ihrer vom Symmetriepunkt strahlenförmig nach außen gerichteten Erstreckung ausgebildeten gekrümmten Ersreckungsverlauf mit einem vom Symmetriepunkt nach außen hin zunehmendem Neigungswinkels β der Kurve zu der durch den Symmetriepunkt gebildeten radialen Richtung ausgebildet sind. Hierdurch kann der erzielbare Kontrast weiter optimiert werden.

Besonders vorteilhaft ist die Ausbildung eines Fahrzeugreifens gemäß den Merkmalen von Anspruch 7, wobei die Kurven der Kurvenschar konzentrische Kreise - insbesondere um einen auf der Reifenachse angeordneten Mittelpunkt - bilden. Durch diese Ausbildung wird eine besonders einfache Herstellung der erforderlichen Reifenform zur Ausformung der mit schraffurartigem Muster ausgebildeten Oberfläche ermöglicht.

Besonders vorteilhaft ist die Ausbildung eines Fahrzeugreifens gemäß den Merkmalen von Anspruch 8, wobei benachbarte linienförmige Erhebungen innerhalb des mit dem schraffurartigen Muster ausgebildeten Oberflächenbereichs jeweils in der Position ihres geringsten Abstandes zu einander mit einem Abstand a von 0,1mm ≤ a ≤ b ausgebildet sind, wobei b die senkrecht zur Erstreckungsrichtung der linienförmigen Erhebungen ausgebildete Breite der linienförmigen Erhebungen ist. Hierdurch kann ein großer Kontrast bei zuverlässiger Ausformungbarkeit einfach umgesetzt werden.

Besonders vorteilhaft ist die Ausbildung eines Fahrzeugreifens gemäß den Merkmalen von Anspruch 9, wobei die linienförmig Erhebungen in den Querschnittsebenen senkrecht zur Haupterstreckungsrichtung der linienförmigen Erhebung jeweils mit einer Schnittkontur ausgebildet sind, deren gekrümmter Konturverlauf einen Kreisabschnitt - insbesondere einen Halbkreis -, eine Ellipsenabschnitt - insbesondere eine Halbellipse - oder eine Parabelform bildet. Durch diese Ausbildung kann besonders wirkungsvoll ein verbesserter Schutz gegen Abrieb bei Reduktion der Verschmutzungsgefahr der Seitenschalen ermöglicht werden.

Besonders vorteilhaft ist die Ausbildung eines Fahrzeugreifens gemäß den Merkmalen von Anspruch 10, wobei die Fahrzeugreifen PKW-Reifen sind und die Höhe h der linienförmigen Erhebungen mit 0,2mm ≤ h ≤ 0,4mm - insbesondere mit h=0,3mm - ausgebildet ist. Hierdurch wird eine an die bei PKW-Reifen typischen Einsätze und deren Anforderungen optimierte Ausbildung ermöglicht.

Besonders vorteilhaft ist die Ausbildung eines Fahrzeugreifens gemäß den Merkmalen von Anspruch 11, wobei die Fahrzeugreifen Nutzfahrzeug-Reifen sind und die Höhe h der linienförmigen Erhebungen mit 0,3mm ≤ h ≤ 1mm - insbesondere mit h=0,5mm - ausgebildet ist. Hierdurch wird eine an die bei Nutzfahrzeug-Reifen typischen Einsätze und deren Anforderungen optimierte Ausbildung ermöglicht. Die Ausbildung ermöglicht eine große Stabilität der linienförmigen Erhebungen und ausreichen Schutz gegen Anscheuerungen in Baustellen.

Die Erfindung wird im Folgenden an Hand der in den Figuren 1 bis 9 dargestellten Ausführungsbeispiele näher erläutert. Hierin zeigen
- Fig. 1: den schematischen Aufbau eines Reifens in Querschnittdarstellung,
- Fig. 2: die schematische Darstellung einer Seitenwand mit Oberflächenabschnitten mit schraffurartigem Muster und mit Oberflächenabschnitten ohne schraffurartiges Muster,
- Fig. 3: eine Querschnittdarstellung der linienförmigen Erhebungen von Fig. 2 gemäß Schnitt III-III von Fig.2,
- Fig. 4: eine Querschnittdarstellung der linienförmigen Erhebungen von Fig. 2 gemäß Schnitt III-III von Fig.2 in alternativer Ausführung,
- Fig. 5: eine Querschnittdarstellung der linienförmigen Erhebungen von Fig. 2 gemäß Schnitt III-III von Fig.2 in weiterer alternativer Ausführung,
- Fig. 6: eine Querschnittdarstellung der linienförmigen Erhebungen von Fig. 2 gemäß Schnitt III-III von Fig.2 in weiterer alternativer Ausführung,
- Fig. 7: eine Querschnittdarstellung von linienförmigen Erhebungen von Fig. 2 gemäß Schnitt III-III von Fig.2 in weiterer alternativer Ausführung,
- Fig. 8: eine schematische Darstellung einer Seitenwand mit alternativer Ausführung der Oberflächenabschnitte unter Einbezug von Elementen zur Informationsvermittlung und
- Fig. 9: den schematischen Aufbau eines Reifens in Querschnittdarstellung gemäß Fig.1 mit alternativer Ausführung der Seitenwandkontur.

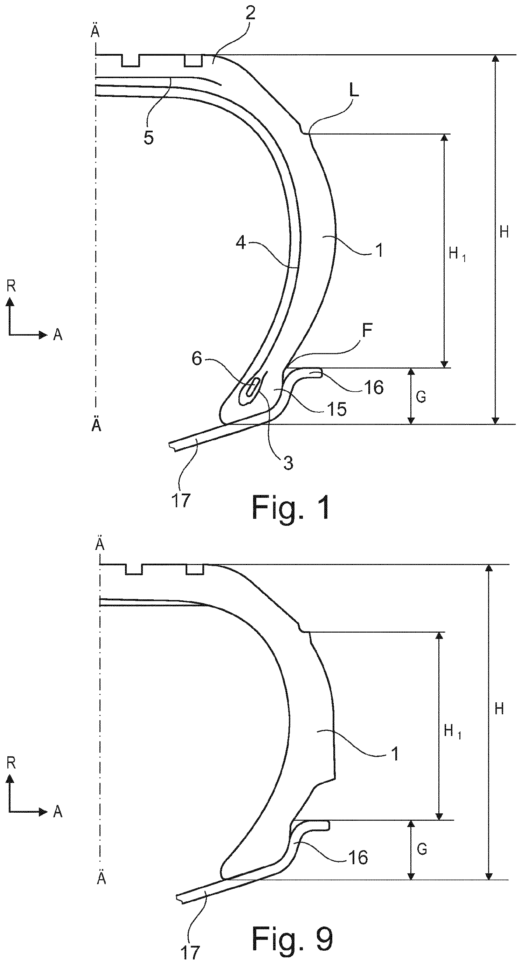

In Fig. 1 ist der Aufbau eines auf einer Felge 17 montierten Fahrzeugluftreifens für Personenkraftwagen beispielhaft dargestellt, bei dem in herkömmlicher bekannter Weise um einen Wulstkern 6 mit - nicht dargestelltem - Kernprofil eine Karkasse 4 radialer Bauart aus einer oder mehreren Lagen von übereinander angeordneten Karkassenlagen umgeschlagen ist, welche sich von diesem Wulstkern 6 ausgehend außerhalb einer besonders luftdicht ausgebildeten Innenschicht bekannter Art über den rechten, dargestellten Schulterbereich, die Äquatorebene Ä-Ä des Fahrzeugluftreifens, den linken - nicht dargestellten - Schulterbereich und bis zu dem linken - nicht dargestellten - Wulstkern mit Kernprofil erstreckt, um welchen sie in herkömmlicher Weise umgeschlagen ist.

Der Fahrzeugluftreifen ist in Fig.1 der Einfachheit halber lediglich in seiner rechten Aufbauhälfte, welche bis zur Äquatorebene Ä-Ä reicht, dargestellt. Die Karkassenlagen sind in herkömmlicher Weise aus einer für Karkassenlagen geeigneten Kautschukmischung bekannter Art und mit darin eingebetteten, jeweils zueinander parallel ausgerichteten textilen oder metallischen Festigkeitsträgern - beispielsweise Korden - bekannter Bauart hergestellt. In herkömmlicher Weise ist im Bereich des Wulstkerns 6 ein Hornprofil 15 bekannter Art und von diesem ausgehend längs der radialen Erstreckung der Karkasse 4 bis in den Schulterbereich reichend in axialer Richtung A des Reifens außerhalb der Karkasse auf die Karkasse 4 ein Seitenstreifen 1- hergestellt aus einer für Seitenstreifen geeigneten Kautschukmischung bekannter Art - aufgelegt. Über den Umfang des Reifens erstreckt ist radial außerhalb der Karkasse 4 ein Gürtel 5 bekannter Art, welcher aus mehreren Stahlgürtellagen und gegebenenfalls aus einer darüber radial außerhalb der Stahlgürtellagen angeordneten Bandage bekannter Art ausgebildet ist. Den Abschluss des Reifenaufbaus bildet in bekannter Weise ein profilierter Laufstreifen 2 - hergestellt aus einer oder mehreren für Laufstreifen geeigneten Kautschukmischung(en) bekannter Art.

Der aufgebaute Reifenrohling wird in bekannter Weise in einer segmentierten Profilform mit einer separat ausgebildeten Seitenwandform bekannter Art zu dem fertigen Reifen ausgeformt und ausvulkanisiert. Bei der Ausformung in der Reifenvulkanisationsform wird der Laufstreifen 2 dabei mit seinem Laufstreifenprofil zu einem profiliertem Laufstreifen ausgeformt und der Seitenstreifen 1 wird unter anderem an seiner in axialer Richtung A des Reifens nach außen vom Reifen weg weisenden Oberfläche in Oberflächenabschnitten 8 mit feinen linienförmigen Erhebungen 13 ausgeformt.

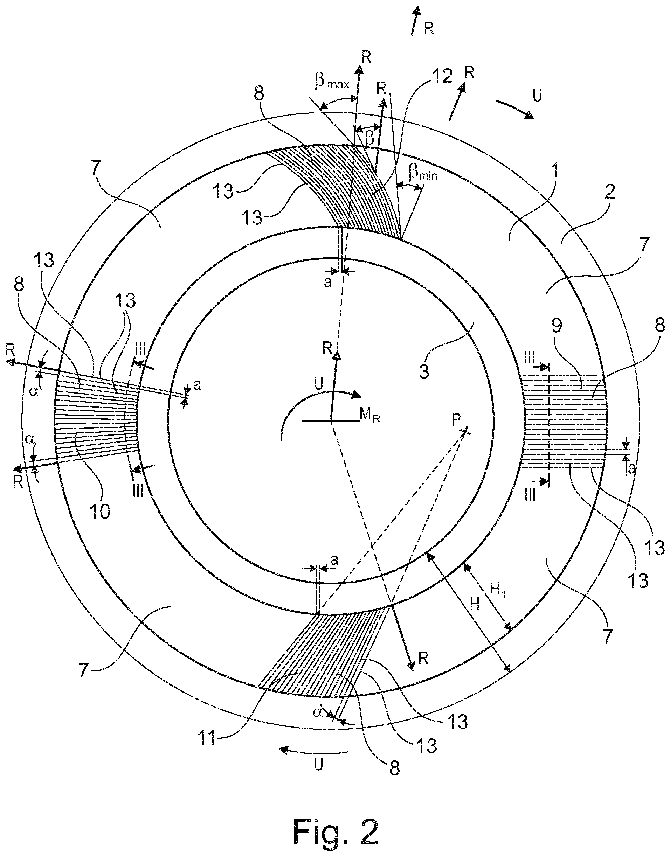

Wie in Fig. 1 und 2 zu erkennen ist, ist der fertig ausgeformte und vulkanisierte Reifen mit einer maximalen Querschnittshöhe H des Reifens ausgebildet. Zwischen Laufstreifenprofil 2 und Wulstkern 6 sind in einem radialem Erstreckungsabschnitt der Höhe H₁ über den Umfang des Fahrzeugluftreifens verteilt in alternierender Reihenfolge Oberflächenabschnitte 7 und 8 hintereinander angeordnet, welche sich über die Erstreckungshöhe H₁ des Seitenwandstreifens erstrecken.

Die Oberflächenabschnitte 8 sind jeweils mit einer Vielzahl von nebeneinander angeordneten linienförmigen Erhebungen 13 ausgebildet, die sich jeweils innerhalb des Oberflächenabschnitts 8 der Seitenwand nicht schneiden. Die linienförmigen Erhebungen 13 eines Oberflächenabschnitts 8 bilden dabei jeweils ein schraffurartiges Muster 9 bzw. 10 bzw. 11 bzw. 12 innerhalb des jeweiligen Oberflächenabschnitts 8. In den Oberflächenabschnitten 7 sind keine derartigen schraffurartigen Muster in Form von linienförmigen Erhebungen ausgebildet. Die linienförmigen Erhebungen 13 eines Oberflächenabschnitts 8 bilden dabei in ihrem Erstreckungsverlauf längs der jeweiligen linienförmigen Erhebung 13 eine Kurve, die jeweils der gleichen Kurvenschar zuzuordnen ist.

In Fig. 2 sind beispielhaft vier Oberflächenabschnitte 8 mit unterschiedlichen Ausführungsbeispielen von Kurvenscharen 9 bzw. 10 bzw. 11 bzw. 12 dargestellt.

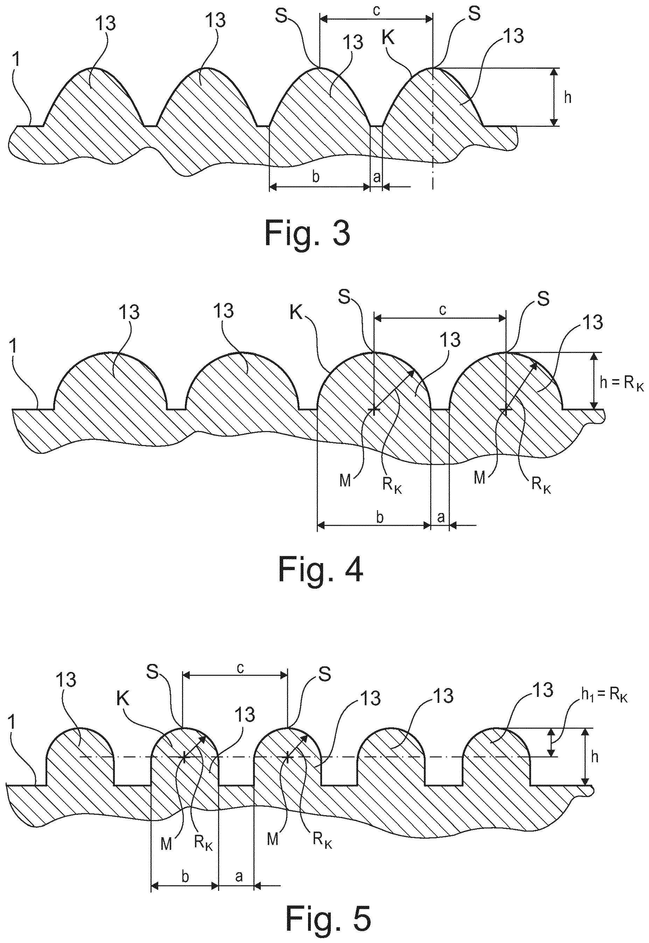

Wie den Fig. 3 bis 7 zu entnehmen ist, erstrecken sich die linienförmigen Erhebungen 13 dabei in den Querschnittsebenen senkrecht zur Ersreckungsrichtung der linienförmigen Erhebung 13 ausgehend von der nach axial außen gerichteten Oberfläche der sie umgebenden Seitenwand 1 in Richtung senkrecht zur Seitenwandoberfläche 1 jeweils über eine maximale Erstreckungshöhe h bis zu einem Scheitelpunkt S. Die linienförmigen Erhebungen 13 sind in ihrer Schnittposition mit der sie umgebenden Seitenwandoberfläche mit ihrer maximalen senkrecht zur Erstreckungsrichtung der linienförmigen Erhebungen 13 gemessenen Erstreckungsbreite b ausgebildet. Innerhalb des Erstreckungsbereiches eines Oberflächenabschnitts 8 sind benachbarte linienförmige Erhebungen 13 jeweils in der Position ihres engsten Abstandes zueinander, welcher in der sie umgebenden Seitenwandoberfläche gemessen wird, mit einem Abstand a zueinander ausgebildet. In der Position, in welcher die benachbarten linienförmigen Erhebungen 13 einen geringsten Abstand a zueinander aufweisen, sind ihre in den Querschnittsebenen senkrecht zur Erstreckungsrichtung der linienförmigen Erhebungen 13 gebildeten Scheitelpunkte S mit einem Abstand c zueinander ausgebildet.

Fig. 2 zeigt ein Ausführungsbeispiel einer Kurvenschar 9 von Kurvenverläufen der linienförmigen Erhebungen 13, bei der die linienförmigen Erhebungen 13 längs ihrer Erstreckung mit konstantem Abstand a zueinander ausgebildet sind und bei der die linienförmigen Erhebungen 13 im Wesentlichen geradlinig und parallel zueinander ausgerichtet verlaufen. Im dargestellten Ausführungsbeispiel ist die Kurvenschar 9 dabei so ausgerichtet, dass eine der linienförmigen Erhebungen genau in radialer Richtung R des Reifens ausgerichtet ist und die anderen hierzu parallel ausgerichtet verlaufen.

Fig. 2 zeigt ein alternatives Ausführungsbeispiel, bei dem die linienförmigen Erhebungen 13 mit ihrem Erstreckungsverlauf Kurven einer Kurvenschar 10 aus einer Vielzahl von mit gleichem Winkel α voneinander beabstandeten strahlenförmig sich durch einen gemeinsamen Strahlenmittelpunkt erstreckenden Kurven bilden. Die Kurven sind weitgehend radial zum Strahlenmittelpunkt ausgebildet. Die Kurven sind in der Reifenoberfläche punktsymmetrisch zu einem Symmetriepunkt ausgebildet sind. Die Kurvenschar 10 ist dabei eine Kurvenschar, welche punktsymmetrisch zu einem auf der Reifenachse ausgebildeten Mittelpunkt M_{R} ausgebildet ist, wobei sich die Kurven ausgehend vom Mittelpunkt M_{R} strahlenförmig in radialer Richtung R nach außen erstrecken und benachbarte Kurven jeweils einen gleich großen Winkel α miteinander einschließen, wobei α ≤ 1° ist. Im dargestellten Ausführungsbeispiel ist α = 0,5° gewählt.

Fig. 2 zeigt ein weiteres Ausführungsbeispiel, bei dem die linienförmigen Erhebungen 13 mit ihrem Erstreckungsverlauf Kurven einer Kurvenschar 11 aus einer Vielzahl von mit gleichem Winkel α voneinander beabstandeten strahlenförmig sich durch einen gemeinsamen Strahlenmittelpunkt erstreckenden Kurven bilden. Die Kurven sind in der Reifenoberfläche punktsymmetrisch zu einem Symmetriepunkt ausgebildet. Die Kurvenschar 11 ist dabei eine Kurvenschar, welche punktsymmetrisch zu zu einem Punkt P, welcher außerhalb der Reifenachse angeordnet ist, ausgebildet ist, wobei sich die Kurven strahlenförmig vom Punkt P nach außen erstrecken. Der Punkt P ist in einer radialen Position des Reifens innerhalb der Position des Wulstkerns 6 angeordnet. Auch in diesem Ausführungsbeispiel schließen benachbarte Kurven jeweils einen gleich großen Winkel α mit α ≤ 1° miteinander ein. Im dargestellten Ausführungsbeispiel ist α = 0,5° gewählt.

Fig. 2 zeigt ein weiteres Ausführungsbeispiel mit einer Kurvenschar 12, bei dem die Kurven von einem in einer Position radial innerhalb der Position des Wulstkerns 6 angeordneten Symmetriepunkt in radialer Richtung nach außen strahlenförmig nach außen erstreckt ausgebildet sind. Die benachbarten Kurven sind um den Symmetriepunkt herum jeweils im Winkelabstand α mit α ≤ 1° zueinander angeordnet. Beispielsweise ist α = 0,5° gewählt. Darüber hinaus sind die Kurven der Kurvenschar 12 längs ihrer Erstreckung ausgehend vom radial inneren Erstreckungsende der linienförmigen Erhebungen 13 in einer radialen Position radial außerhalb des Wulstkerns 6 längs ihrer Erstreckung in der Reifenseitenwand 1 nach radial außen mit gleicher, konstanter Krümmung und mit einem von radial innen nach radial außen hin stetig progressiv zunehmenden Neigungswinkel β zur radialen R ausgebildet.

Die Kurven der dargestellten und erläuterten Kurvenscharen 9,10,11,12 bilden dabei jeweils den Erstreckungsverlauf des Scheitels der linienförmigen Erstreckung ab, welche in den Querschnittsebenen senkrecht zur Erstreckungsrichtung der linienförmigen Erhebungen den in den Fig.3 bis 7 dargestellten Scheitelpunkt S bilden.

Die Abstände a im engsten Abstand sind in den oben genannten Ausführungsbeispielen jeweils mit 0,1mm ≤ a ≤ b gewählt. Die Breite b ist mit 0,3mm ≤ b ≤ 2mm ausgebildet.

Bei dem in den Fig. 1 und 2 dargestellten Pkw-Reifen ist die Erstreckungshöhe h der linienförmigen Erhebungen 13 mit 0,2 mm ≤ h ≤ 0,4 mm ausgebildet, beispielsweise ist Erstreckungshöhe h = 0,3 mm ausgebildet.

Fig. 3 zeigt die Querschnittskontur K der linienförmigen Erhebungen 13 in den senkrecht zur Erstreckungsrichtung der linienförmigen Erhebungen 13 gebildeten Schnittebenen am Beispiel der Kurvenschar 9. Fig. 3 zeigt dabei eine Ausführung, bei der die Schnittkontur K der linienförmigen Erhebungen 13 einer umgekehrten Parabelform entspricht, welche ihren Maximalwert im Scheitelpunkt S aufweist. Die Parabeln erstrecken sich dabei über die gesamte Erstreckungshöhe h bis zu der die linienförmigen Erhebungen 13 umgebenden Oberfläche der Reifenseitenwand 1.

Fig. 4 zeigt ein alternatives Ausführungsbeispiel, bei dem die Schnittkonturlinie K der linienförmigen Erhebungen 13 einen Halbkreis mit dem Mittelpunkt M und einem Kreisradius R_{K} bilden mit R_{K} = h.

Fig. 5 zeigt ein weiteres Ausführungsbeispiel der Schnittkontur von derartigen linienförmigen Erhebungen 13, bei welchem die Schnittkonturlinie K in einem äußeren Erstreckungsbereich der Höhe h₁ der linienförmigen Erhebung 13 mit h₁ ≥ h/2 einen Halbkreis um einen Mittelpunkt M mit einem Krümmungsradius R_{K} bilden mit R_{K} = h₁. Bei diesem Ausführungsbeispiel ist die Schnittkonturlinie K in ihrem inneren im Anschluss an den äußeren Erstreckungsbereich der Erstreckungshöhe h₁ zur Reifeninnenseite hin ausgebildeten inneren Erstreckungsbereich der Erstreckungshöhe (h - h₁) geradlinig ausgebildet.

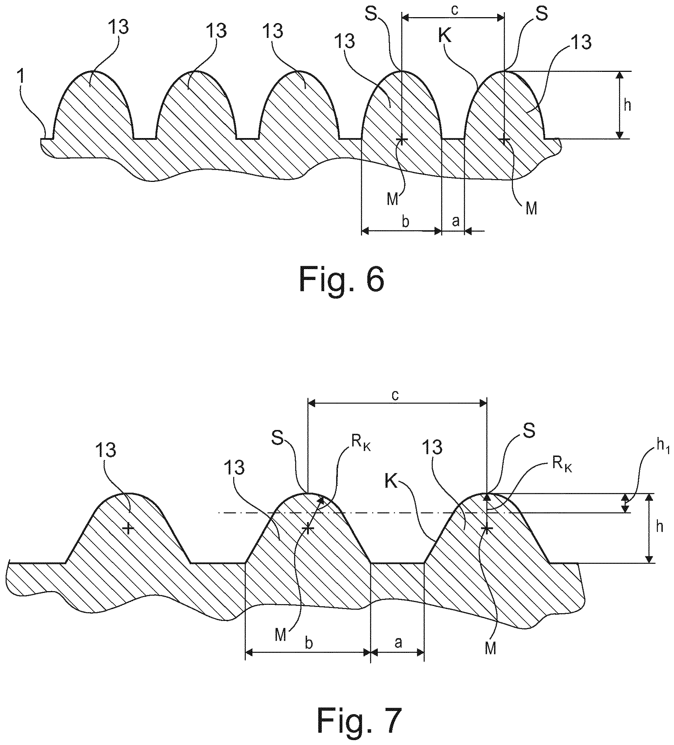

Fig. 6 zeigt ein weiteres alternatives Ausführungsbeispiel der Querschnittsform der linienförmigen Erhebungen 13, bei dem die Schnittkonturlinie K eine Halbellipse mit dem Ellipsenmittelpunkt M bildet, wobei die zwischen dem Mittelpunkt M und dem Scheitelpunkt S gebildete Strecke SM die größere Halbachse der Ellipse bildet mit einer Erstreckungslänge SM = h.

Fig. 7 zeigt ein Ausführungsbeispiel, welches wie das Ausführungsbeispiel von Fig. 5 mit einer Schnittkonturlinie K der Querschnitte der linienförmigen Erhebungen 13 ausgebildet ist, welche einen äußeren Erstreckungsabschnitt h₁ mit kreissegmentförmiger Linienkontur und einem inneren Erstreckungsabschnitt der Erstreckungshöhe (h-h₁) mit geradlinigem Erstreckungsverlauf der Konturlinie K aufweist. In diesem Ausführungsbeispiel ist der äußere Erstreckungsbereich h₁ mit h₁ > h/2 und mit h₁ < R_{K} ausgebildet. Der äußere Erstreckungsbereich bildet hier eine Kreissegmentkonturlinie ab, welche kleiner ist als ein Halbkreis, der innere Erstreckungsbereich bildet eine tangentiale Fortführung der Konturlinie des äußeren Bereichs.

In den oben dargestellten Ausführungsbeispielen ist der Abstand c der benachbarten Scheitelpunkte S in den Querschnittsdarstellungen an seiner engsten Stelle mit 0,4mm ≤ c ≤ 3,9mm ausgebildet.

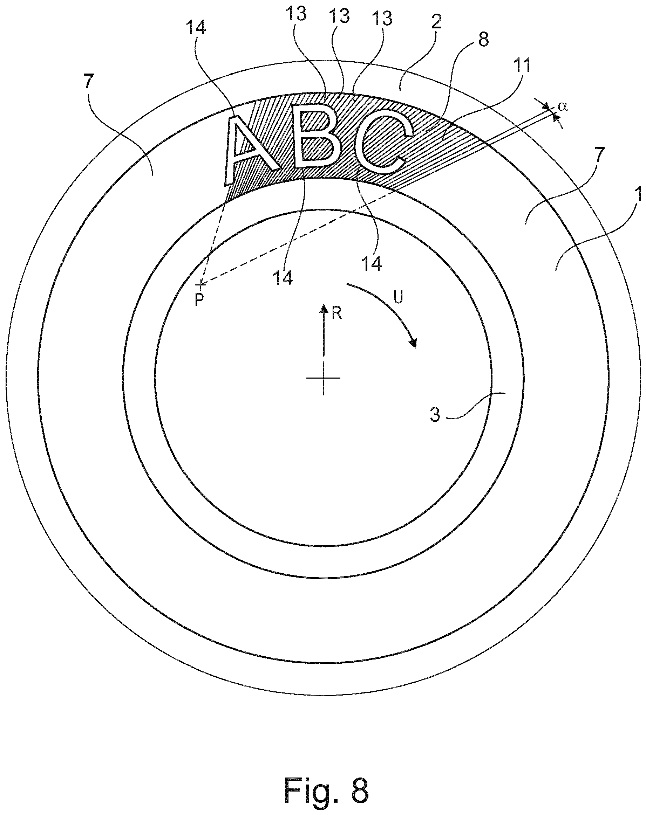

Fig. 8 zeigt ein Ausführungsbeispiel eines Oberflächenabschnittes 8 mit angrenzendem Oberflächenabschnitt 7 einer Seitenwand 1, bei welchem zusätzlich große Buchstaben 14 mit in der Reifenoberfläche ausgebildet sind, wobei die Buchstaben 14 - wie bei einer Gravur - vertieft in der Seitenwandoberfläche 1 ausgebildet sind und der die Buchstaben 14 bildende Vertiefungsgrund eine glatte Oberfläche bildet. Im dargestellten Ausführungsbeispiel von Fig. 8 ist der Oberflächenabschnitt 8 mit linienförmigen Erhebungen 13 ausgebildet, welche analog zur Kurvenschar 11 von Fig. 2 ausgebildet ist. Im Oberflächenabschnitt 8 sind dabei lediglich die Buchstaben 14 frei von derartigen linienförmigen Erhebungen 13. In Fig. 8 ist dabei deutlich zu erkennen, wie innerhalb des Oberflächenabschnitts 8 mit den linienförmigen Erhebungen 13 die Buchstaben 14 deutlich kontrastreicher als im benachbarten Oberflächenabschnitt 7 in Erscheinung treten. Diese Effekte sind auch an der schwarzen Oberfläche des Reifens zu erkennen.

Fig. 9 zeigt den Querschnitt eines Reifens mit einem von dem in Fig. 1 abweichenden Außenkonturverlauf der Reifenseitenwand 1. Zur Vereinfachung sind in der Fig. 9 die Bauteile des Wulstkerns, der Karkasse und des Gürtels nicht eingetragen.

Auch in diesem Ausführungsbeispiel ist - wie beim Reifen von Figur 1 - die obere Erstreckungsgrenze der Höhe H₁ die radiale Position der Grenzlinie zwischen der durch die Seitenwandschale zur Ausformung der Seitenwand im Reifen ausgebildeten Ausformung und der durch die Laufstreifenprofilformsegmente gebildeten Ausformung der Oberfläche. Der radial innere Begrenzungspunkt der Erstreckungshöhe H₁ entspricht dem Maß der Felgenhornhöhe der Grundkontur einer Felge gemäß E.T.R.T.O.-Standard Manual 2011 für den jeweiligen Reifen. Die Höhe des Felgenhorns (Felgenhornhöhe) 16 entspricht dabei der Höhe G der Grundkontur der Felge gemäß E.T.R.T.O.-Standard Manual 2011.

In den oben genannten Ausführungsbeispielen erstreckt sich der Oberflächenabschnitt 8 jeweils über den gesamten radialen Erstreckungsbereich der Höhe H₁. In anderer -nicht dargestellter - Ausführung ist dieser mit der Schraffur ausgebildete Oberflächenabschnitt 8 nur über einen Teil der Erstreckungshöhe H₁ ausgebildet, beispielsweise in der äußeren Hälfte der Erstreckung H₁.

Auch wenn die oben genannten Ausführungsbeispiele am Beispiel eines Pkw-Reifens dargestellt sind, ist eine derartige Ausbildung auch in Nutzfahrzeug-Reifen geeignet. Dabei ist in einem Ausführungsbeispiel die Erstreckungshöhe h mit 0,3 mm ≤ h ≤ 1 mm, beispielsweise mit h=0,5mm gewählt.

### Bezugszeichenliste

### (Teil der Beschreibung)

- 1: Seitenwandgummistreifen
- 2: Profilierter Laufstreifen
- 3: Wulstbereich
- 4: Karkasse
- 5: Gürtel
- 6: Wulstkern
- 7: Oberflächenbereich
- 8: Oberflächenbereich
- 9: Kurvenschar
- 10: Kurvenschar
- 11: Kurvenschar
- 12: Kurvenschar
- 13: Linienförmige Erhebung
- 14: Informationszeichen
- 15: Wulstprofil
- 16: Felgenhorn

## Patentansprüche

1. Fahrzeugreifen - insbesondere Fahrzeugluftreifen - mit profiliertem Laufstreifen (2) und zwei Seitenwänden (1), wobei auf wenigstens einer Seitenwand (1) ein schraffurartiges Muster aus einer Vielzahl von linienförmigen Erhebungen (13) ausgebildet ist, die einer Kurvenschar (9,10,11,12) zuzuordnen sind und die sich innerhalb des mit dem schraffurartigen Muster ausgebildeten Oberflächenbereichs (8) der Seitenwand (1) nicht schneiden, wobei die linienförmigen Erhebungen (13) jeweils längs ihrer Erstreckung mit einer senkrecht zur Mantelkontur der Seitenwand (1) gemessenen Erstreckungshöhe h≤0,8mm ausgebildet sind, **wobei die linienförmigen Erhebungen (13) in den Querschnittsebenen senkrecht zur Haupterstreckungsrichtung der linienförmigen Erhebung (13) jeweils mit einer Schnittkontur ausgebildet sind, welche wenigstens in dem zwischen der Erstreckungshöhe (h/2) und der** Erstreckungshöhe **h der linienförmigen Erhebung (13) ausgebildeten äußeren, vom Reifen wegweisend ausgebildeten Erstreckungsbereich mit einem zum Reifeninnern hin gekrümmten Konturverlauf und mit einem in der Erstreckungshöhe h ausgebildeten Scheitelpunkt S der Erhebung (13) ausgebildet ist dadurch gekennzeichnet**,
**dassdie** linienförmigen **Erhebungen (13) in den Querschnittsebenen senkrecht zur Haupterstreckungsrichtung der linienförmigen Erhebung (13) jeweils mit einer Schnittkontur ausgebildet sind, die in ihrem inneren zum Reifen hingerichteten Erstreckungsabschnitt geradlinig ausgebildet sind.**

2. Fahrzeugreifen gemäß den Merkmalen von Anspruch 1,
wobei die Kurvenschar (9) aus jeweils parallel zueinander ausgebildeten Kurven ausgebildet ist.

3. Fahrzeugreifen gemäß den Merkmalen von Anspruch 1,
wobei die Kurvenschar (10,11,12) aus punktsymmetrischen Kurven ausgebildet ist.

4. Fahrzeugreifen gemäß den Merkmalen von Anspruch 3,
wobei die Kurven der Kurvenschar (10,11,12) in einer Position außerhalb des mit dem schraffurartigen Muster ausgebildeten Oberflächenbereichs (8) der Seitenwand (1) mit einem - insbesondere auf der Reifenachse angeordneten - gemeinsamen Schnittpunkt ausgebildet sind.

5. Fahrzeugreifen gemäß den Merkmalen von Anspruch 3 oder 4,
wobei die Kurvenschar (10,11,12) als Strahlenschar durch den Symmetriepunkt mit gleichen zwischen benachbarten Strahlen eingeschlossenen Winkeln α - insbesondere mit 0°≤ α ≤1° - ausgebildet ist.

6. Fahrzeugreifen gemäß den Merkmalen von Anspruch 3 oder 4,
wobei die Kurven der Kurvenschar (12) mit einem längs ihrer vom Symmetriepunkt strahlenförmig nach außen gerichteten Erstreckung ausgebildeten gekrümmten Verlauf mit einem vom Symmetriepunkt nach außen hin zunehmendem Neigungswinkels β der Kurve zu der durch den Symmetriepunkt gebildeten radialen Richtung ausgebildet sind.

7. Fahrzeugreifen gemäß den Merkmalen von Anspruch 3,
wobei die Kurven der Kurvenschar konzentrische Kreise - insbesondere um einen auf der Reifenachse angeordneten Mittelpunkt - bilden.

8. Fahrzeugreifen gemäß den Merkmalen von einem der vorangegangenen Ansprüche,
wobei benachbarte linienförmige Erhebungen (13) innerhalb des mit dem schraffurartigen Muster ausgebildeten Oberflächenbereichs (8) jeweils in der Position ihres geringsten Abstandes zu einander mit einem Abstand a von 0,1mm ≤ a ≤ b ausgebildet sind, wobei b die senkrecht zur Erstreckungsrichtung der linienförmigen Erhebungen (13) ausgebildete Breite der linienförmigen Erhebungen (13) ist.

9. Fahrzeugreifen gemäß den Merkmalen von einem der vorangegangenen Ansprüche,
wobei die linienförmig Erhebungen (13) in den Querschnittsebenen senkrecht zur Haupterstreckungsrichtung der linienförmigen Erhebung (13) jeweils mit einer Schnittkontur ausgebildet sind, deren gekrümmter Konturverlauf einen Kreisabschnitt - insbesondere einen Halbkreis - , eine Ellipsenabschnitt - insbesondere eine Halbellipse - oder eine Parabelform bildet.

10. Fahrzeugreifen gemäß den Merkmalen von einem der vorangegangenen Ansprüche,
wobei die Fahrzeugreifen PKW-Reifen sind und die Höhe h der linienförmigen Erhebungen (13) mit 0,2mm ≤ h ≤ 0,4mm - insbesondere mit h=0,3mm - ausgebildet ist.

11. Fahrzeugreifen gemäß den Merkmalen von einem der Ansprüche 1 bis 9, wobei die Fahrzeugreifen Nutzfahrzeug-Reifen sind und die Höhe h der linienförmigen Erhebungen (13) mit 0,3mm ≤ h ≤ 1mm - insbesondere mit h=0,5mm - ausgebildet ist.

## Claims

1. Vehicle tyre - in particular pneumatic vehicle tyre
- with a profiled tread (2) and two sidewalls (1), wherein on at least one sidewall (1) there is formed a hatched pattern made up of a multiplicity of linear elevations (13), which can be assigned to a set of curves (9, 10, 11, 12) and do not intersect within the surface region (8) of the sidewall (1) that is formed with the hatched pattern, wherein the linear elevations (13) are each formed along their extent with a height of extent h ≤ 0.8 mm, measured perpendicularly to the lateral surface contour of the sidewall (1), wherein the linear elevations (13) are each formed in the cross-sectional planes perpendicular to the main direction of extent of the linear elevation (13) with a sectional contour which is formed with a contour profile curved towards the interior of the tyre, at least in the outer region of the extent that is formed between the height of extent (h/2) and the height of extent h of the linear elevation (13) and formed as directed away from the tyre, and is formed with an apex point S of the elevation (13) that is formed in the height of extent h,
**characterized**
**in that** the linear elevations (13) are each formed in the cross-sectional planes perpendicular to the main direction of extent of the linear elevation (13) with a sectional contour which are formed as straight in its inner portion of extent directed toward the tyre.

2. Vehicle tyre according to the features of Claim 1, wherein the set of curves (9) is formed by curves that are each formed parallel to one another.

3. Vehicle tyre according to the features of Claim 1, wherein the set of curves (10, 11, 12) is formed as point-symmetrical curves.

4. Vehicle tyre according to the features of Claim 3, wherein the curves of the set of curves (10, 11, 12) are formed with a common point of intersection - in particular arranged on the tyre axis - in a position outside the surface region (8) of the sidewall (1) that is formed with the hatched pattern.

5. Vehicle tyre according to the features of Claim 3 or 4,
wherein the set of curves (10, 11, 12) is formed as a set of radial lines through the point of symmetry with the same angles α included between adjacent radial lines - in particular with 0° ≤ α ≤ 1°.

6. Vehicle tyre according to the features of Claim 3 or 4,
wherein the curves of the set of curves (12) are formed with a curved profile, formed along their extent directed radially outwards from the point of symmetry and having an angle of inclination β of the curve in relation to the radial direction formed by the point of symmetry that increases outwardly from the point of symmetry.

7. Vehicle tyre according to the features of Claim 3, wherein the curves of the set of curves form concentric circles - in particular around a centre point arranged on the tyre axis.

8. Vehicle tyre according to the features of one of the preceding claims,
wherein adjacent linear elevations (13) are each formed within the surface region (8) that is formed with the hatched pattern in the position of their smallest distance from one another with a distance a of 0.1 mm ≤ a ≤ b, where b is the width of the linear elevations (13) formed perpendicularly to the direction of extent of the linear elevations (13).

9. Vehicle tyre according to the features of one of the preceding claims,
wherein the linear elevations (13) are each formed in the cross-sectional planes perpendicular to the main direction of extent of the linear elevation (13) with a sectional contour of which the curved contour profile forms a portion of a circle - in particular a semi-circle -, a portion of an ellipse - in particular a semi-ellipse - or a form of a parabola.

10. Vehicle tyre according to the features of one of the preceding claims,
wherein the vehicle tyres are car tyres and the height h of the linear elevations (13) is formed with 0.2 mm ≤ h ≤ 0.4 mm - in particular with h = 0.3 mm.

11. Vehicle tyre according to the features of one of Claims 1 to 9,
wherein the vehicle tyres are commercial vehicle tyres and the height h of the linear elevations (13) is formed with 0.3 mm ≤ h ≤ 1 mm - in particular with h = 0.5 mm.

## Revendications

1. Pneu de véhicule - en particulier pneumatique de véhicule - avec une bande de roulement profilée (2) et deux flancs (1), dans lequel un motif hachuré est formé sur au moins un flanc (1) par une multiplicité de protubérances en forme de lignes (13), qui doivent être associées à un faisceau de courbes (9, 10, 11, 12) et qui ne se coupent pas à l'intérieur de la région de la surface (8) du flanc (1) réalisée avec le motif hachuré, dans lequel les protubérances en forme de lignes (13) sont réalisés respectivement le long de leur extension avec une hauteur d'extension h ≤ 0,8 mm mesurée perpendiculairement au contour d'enveloppe du flanc (1), dans lequel les protubérances en forme de lignes (13) sont formées dans les plans de section transversale perpendiculaires à la direction d'extension principale de la protubérance en forme de ligne (13) respectivement avec un contour de coupe qui est formé, au moins dans la région d'extension extérieure, détournée du pneu, formée entre la hauteur d'extension (h/2) et la hauteur d'extension h de la protubérance en forme de ligne (13), avec une allure de contour incurvée en direction de l'intérieur du pneu et avec un sommet S de la protubérance (13) formé à la hauteur d'extension h,
**caractérisé en ce que** les protubérances en forme de lignes (13) sont formées dans les plans de section transversale perpendiculaires à la direction d'extension principale de la protubérance en forme de ligne (13) respectivement avec un contour de coupe, qui est de forme rectiligne dans sa partie d'extension intérieure orientée en direction du pneu.

2. Pneumatique de véhicule selon les caractéristiques de la revendication 1, dans lequel le faisceau de courbes (9) est formé de courbes respectivement parallèles l'une à l'autre.

3. Pneumatique de véhicule selon les caractéristiques de la revendication 1, dans lequel le faisceau de courbes (10, 11, 12) est formé de courbes à symétrie ponctuelle.

4. Pneumatique de véhicule selon les caractéristiques de la revendication 3, dans lequel les courbes du faisceau de courbes (10, 11, 12) sont formées dans une position située à l'extérieur de la région de la surface (8) du flanc (1) formée avec le motif hachuré avec un point d'intersection commun - disposé en particulier sur l'axe du pneu.

5. Pneumatique de véhicule selon les caractéristiques de la revendication 3 ou 4, dans lequel le faisceau de courbes (10, 11, 12) est réalisé sous forme de faisceau de rayons par le point de symétrie avec des angles α égaux - en particulier avec 0° ≤ α ≤ 1° - formés entre des rayons voisins.

6. Pneumatique de véhicule selon les caractéristiques de la revendication 3 ou 4, dans lequel les courbes du faisceau de courbes (12) sont formées avec une allure incurvée formée le long de leur extension orientée vers l'extérieur en forme de rayons à partir du point de symétrie, avec un angle d'inclinaison β de la courbe par rapport à la direction radiale formée par le point de symétrie, qui augmente vers l'extérieur à partir du point de symétrie.

7. Pneumatique de véhicule selon les caractéristiques de la revendication 3, dans lequel les courbes du faisceau de courbes forment des cercles concentriques - en particulier autour d'un point central disposé sur l'axe du pneu.

8. Pneumatique de véhicule selon les caractéristiques de l'une quelconque des revendications précédentes, dans lequel des protubérances en forme de lignes voisines (13) sont formées à l'intérieur de la région de la surface (8) réalisée avec le motif hachuré respectivement dans la position de leur plus petite distance l'une de l'autre avec une distance a de 0,1 mm ≤ a ≤ b, dans laquelle b est la largeur des protubérances en forme de lignes (13) formée perpendiculairement à la direction d'extension des protubérances en forme de lignes (13).

9. Pneumatique de véhicule selon les caractéristiques de l'une quelconque des revendications précédentes, dans lequel les protubérances en forme de lignes (13) sont formées dans les plans de section transversale perpendiculaires à la direction d'extension principale de la protubérance en forme de ligne (13) respectivement avec un contour de coupe, dont l'allure de contour incurvée forme une partie de cercle - en particulier un demi-cercle -, une partie d'ellipse - en particulier une demi-ellipse -, ou une forme parabolique.

10. Pneumatique de véhicule selon les caractéristiques de l'une quelconque des revendications précédentes, dans lequel les pneumatiques de véhicule sont des pneus de voitures et la hauteur h des protubérances en forme de lignes (13) est réalisée avec 0,2 mm ≤ h ≤ 0,4 mm - en particulier avec h = 0,3 mm.

11. Pneumatique de véhicule selon les caractéristiques de l'une quelconque des revendications 1 à 9, dans lequel les pneumatiques de véhicule sont des pneus de véhicules utilitaires et la hauteur h des protubérances en forme de lignes (13) est réalisée avec 0,3 mm ≤ h ≤ 1 mm - en particulier avec h = 0,5 mm.
